# EUROPÄISCHE PATENTSCHRIFT

(11) **EP 3 410 005 B1**
(45) Veröffentlichungstag und Bekanntmachung des Hinweises auf die Patenterteilung: **03.04.2019**
(21) Anmeldenummer: 17173870.1
(22) Anmeldetag: 01.06.2017
(51) Int. Cl.: F21V 5/00, F21V 15/01, F21V 17/10, F21S 4/28, F21V 5/02, F21V 5/04, F21W 131/405, F21Y 101/00, F21Y 103/10, F21Y 115/10, F21S 8/04

(54) **BELEUCHTUNGSVORRICHTUNG**
ILLUMINATION DEVICE
DISPOSITIF D'ÉCLAIRAGE

(43) Veröffentlichungstag der Anmeldung: 05.12.2018
(73) Patentinhaber: LTS Licht & Leuchten GmbH, 88069 Tettnang (DE)
(72) Erfinder: Köpplin, Erich, 88250 Weingarten (DE)
(74) Vertreter: Engelhardt, Volker

(56) Entgegenhaltungen:
- DE-A1- 19 825 269
- DE-A1-102013 103 539
- US-A1- 2012 314 407

## Beschreibung

Die Erfindung bezieht sich auf eine Beleuchtungsvorrichtung nach dem Oberbegriff des Patentanspruches 1.

Solche Beleuchtungsvorrichtungen sind beispielsweise aus der EP 1 850 061 A1 bekannt und dienen dazu, Warenangebote in Regalen auszuleuchten, um diese verkaufsfördernd zu präsentieren. Diese Beleuchtungsvorrichtungen werden insbesondere an Decken von Lebensmittelmärkten oder sonstigen Geschäften angebracht und bestehen aus einer U-förmig ausgestalteten Leiste, deren Länge wesentlich größer bemessen ist als deren Breite. In der Leiste sind eine Vielzahl von LEDs angebracht, durch die Lichtwellen emittiert sind. Die LEDs strahlen demnach entlang einer dreidimensionalen Beleuchtungsausdehnung aus der Leiste in Richtung des Bodens. Zwischen den beiden parallel verlaufenden Schenkeln der Leiste ist ein Lichtteiler vorgesehen, der aus einer biegefesten Platte gebildet ist. In die beiden parallel verlaufenden Schenkeln ist jeweils eine Führungsbahnen eingearbeitet, die fluchtend zueinander verlaufen. Der Lichtteiler kann in die Führungsbahnen eingeschoben werden.

In den Lichtteiler ist eine optische Struktur in Form einer Linse oder dergleichen eingearbeitet, durch die die von den LEDs emittierten Lichtwellen in eine vorgegebene Richtung geleitet sind.

Nachteiliger Weise sind eine Vielzahl von derartigen Lichtteilern in die mehrere Meter lange Leiste einzuschieben, denn die Lichtteiler können aufgrund ihrer optischen Strukturen nicht über eine vorgegebene Länge gefertigt werden. Zudem dehnen sich die plattenförmigen Lichtteiler während des Betriebes der LEDs aufgrund der von dieser generierten Wärme aus, so dass zwischen zwei benachbarten Lichtteilern ein Luftspalt vorzusehen ist, durch den die jeweilige längliche Ausdehnung der Lichtteiler ermöglicht ist. Aufgrund der geometrischen Abmessungen des Lichtteilers erfolgt in dessen Längsrichtung, also parallel zu der Leiste, eine erheblich größere Ausdehnung als in Querrichtung, die denLuftspalt zwischen den benachbarten Lichtteilern oder ein Eintauchen der endseitigen Lichtteiler in die Stirnseite der Leiste erfordert.

Die Herstellungskosten für solche Lichtteiler sind hoch, da die optische Struktur äußerst aufwändig zu fertigen ist.

Aus den Druckschriften US 2012/0314407 A1, DE 198 25 269 A1 sowie DE 10 2013 103 539 A1 können Beleuchtungsvorrichtungen entnommen werden, in denen ein Lichtwellenteiler in Form einer dünnwanddicken und elastisch verformbaren Folie eingebaut sind. Diese Folien weisen eine holographische Struktur auf, und zwar soll das durch die jeweilige Folie hindurch gestrahlte Licht nach dem Durchtritt reflektiert sein, sodass eine möglichst homogene bzw. gleichmäßige Ausleuchtung des der Folie nachgeordneten Raumes erreicht ist.

Insbesondere bei holographischen Folien nach der erstgenannten Druckschrift oder bei Folien mit einer gleichmäßigen Matrix gemäß der zweitgenannten Druckschrift entsteht nachteilige Weise eine Diffusion der durch die Folien hindurchtretenden Lichtwellen. Eine zielgerichtete bzw. vorgegebene Ausleuchtung eines Raumes durch die Beleuchtungsvorrichtung nach dem Stand der Technik ist folglich nicht möglich.

Es ist daher Aufgabe der Erfindung, eine Beleuchtungsvorrichtung der eingangs genannten Gattung derart weiterzubilden, dass zum einen die gewünschte Ausleuchtung von Räumen ermöglicht ist, und dass zum anderen Montage- und Herstellungskosten der Beleuchtungsvorrichtung gegenüber den bisherigen bekannt gewordenen Beleuchtungsvorrichtungen erheblich reduziert ist.

Diese Aufgaben sind erfindungsgemäß durch die Merkmale des kennzeichnen Teils von Patentanspruch 1 gelöst.

Weitere vorteilhafte Weiterbildungen der Erfindung ergeben sich aus den Unteransprüchen.

Dadurch, dass der Lichtwellenteiler als dünnwandige und biegeelastische Folie ausgestaltet ist, dass auf oder in der Folie mindestens eine optische Struktur vorgesehen ist, die in der Beleuchtungsausdehnung der LEDs angeordnet ist, und dass die Folie im montierten Zustand durchgehend über die gesamte Länge der Leiste verläuft, ist erreicht, dass die Beleuchtungsvorrichtung mit geringen Herstellungs- und Montagekosten produziert werden kann, ohne dass die Beleuchtungseigenschaft beeinträchtigt ist, da die optische Struktur auf der Folie günstig herstellbar ist und die Folie durch Abwickeln und Einschieben in die Leiste Bestandteil der Beleuchtungsvorrichtung wird.

Die Folie kann sich zudem über die gesamte Länge der Leiste erstrecken, denn die durch die von den LEDs abgestrahlte Wärme verändert die Ausdehnung der Folie aufgrund deren Dünnwandigkeit lediglich geringfügig.

Durch die Wandstärke der Folie, die zwischen 0,3 mm und 0,7 mm beträgt, ist die Folie demnach biegeelastisch und kann auf eine Rolle zu Transport-, Lager- und Montagezwecken aufgewickelt sein. Zudem ist die Folie mit ihrer jeweils gewünschten optischen Struktur, die erfindungsgemäß in Fresnel- Linsen-Technologie ausgestaltet ist, mit beliebigen optischen Eigenschaften ausgestattet, die an die jeweiligen Kundenbedürfnisse angepasst werden können.

In der Zeichnung ist ein erfindungsgemäßes Ausführungsbeispiel dargestellt, das nachfolgend näher erläutert ist. Im Einzelnen zeigt:
- Figur 1: eine Beleuchtungsvorrichtung mit einer U-förmigen Leiste, in die eine Vielzahl von LEDs eingebaut ist, und die an der Decke eines Raumes
- an: gebracht ist, mit einer in die Leiste eingeschobenen Folie, durch die die Lichtwellen der LEDs in eine bevorzugte Beleuchtungsausdehnung raumseitig gelenkt sind, in perspektivischer Ansicht,
- Figur 2: eine vergrößerte Darstellung der Beleuchtungsvorrichtung gemäß Figur 1 während des Montagezustandes,
- Figur 3a: eine Ausführungsvariante der Folie gemäß Figur 1 mit einer kreisförmigen optischen Struktur und
- Figur 3b: eine zweite Ausführungsvariante der Folie gemäß Figur 1 mit einer polygonalen optischen Struktur.

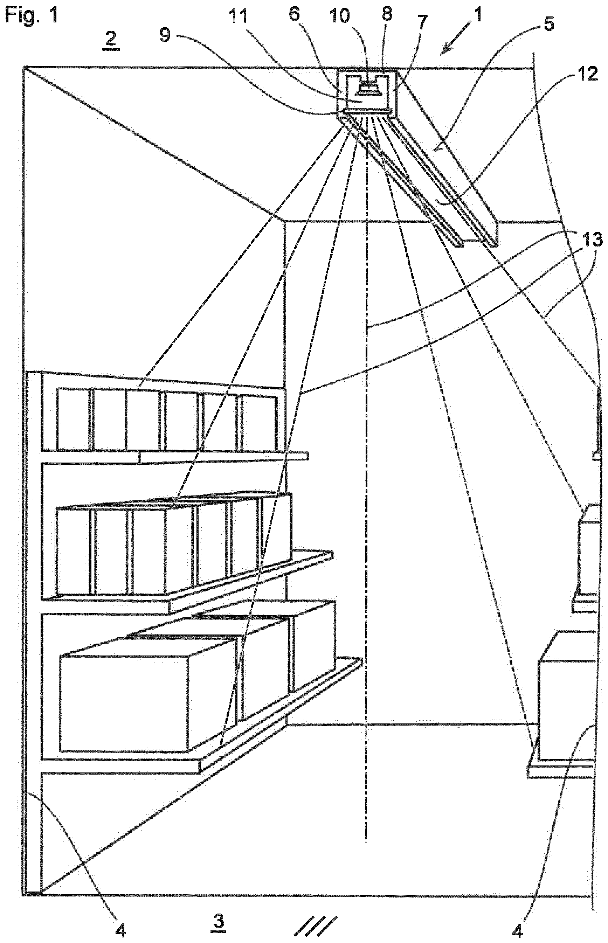

In Figur 1 ist eine Beleuchtungsvorrichtung 1 abgebildet, die an einer Decke 2 eines Raumes angebracht ist. Durch die Beleuchtungsvorrichtung 1 soll ein Boden 3 und zwei parallel zueinander verlaufenden Wände 4 ausgeleuchtet sein.

Die Beleuchtungsvorrichtung 1 umfasst eine Leiste 5, die im Querschnitt U-förmig ausgestaltet ist. Die beiden parallel zueinander verlaufenden Schenkel der Leiste 5 sind mit den Bezugsziffern 6 bzw. 7 gekennzeichnet. Die die beiden Schenkel 6 und 7 verbindende Steg ist mit der Bezugsziffer 8 versehen. Der Steg 8 verläuft demnach an der Decke 2 und ist an dieser befestigt.

In die beiden Schenkel 6 und 7 ist jeweils eine Führungsbahn 9 eingearbeitet, die im Querschnitt U-förmig ausgestaltet ist. Die beiden Führungsbahnen 9, die gegenüber zueinander verlaufen, liegen auf einer identischen Höhe und verlaufen demnach fluchtend zueinander.

An dem Steg 8 der Leiste 5 sind eine Vielzahl von LEDs 10 angebracht, die bestromt sind. Durch die LEDs 10 werden Lichtwellen emittiert bzw. ausgestrahlt, die in Richtung des Bodens 3 und den beiden Wänden 4 verlaufen. Innerhalb der Leiste 5 sind die von den LEDs 10 emittierten Lichtwellen in einer Beleuchtungsausdehnung vorhanden, die mit der Bezugsziffer 11 gekennzeichnet ist.

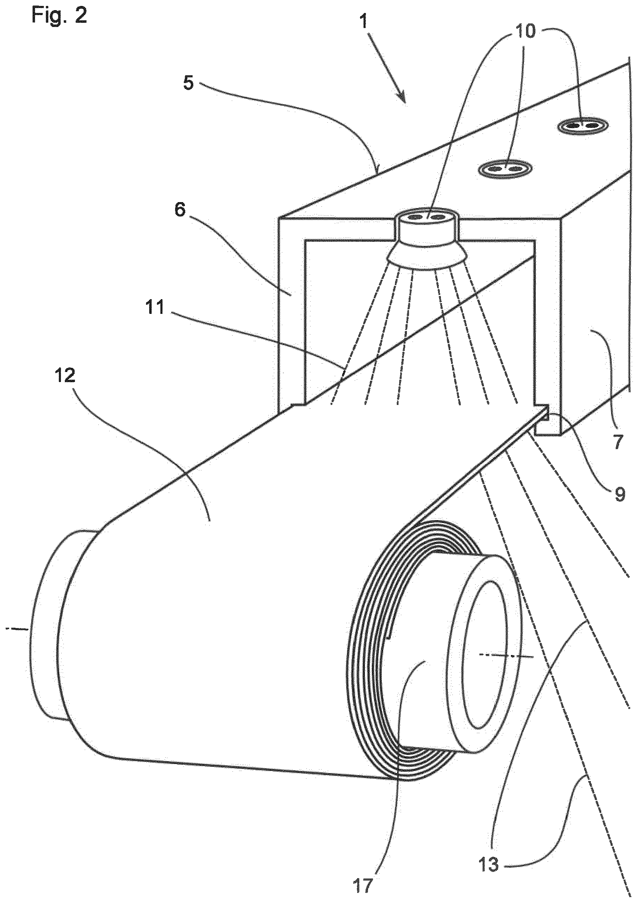

Insbesondere Figur 2 ist zu entnehmen, dass in die beiden Führungsbahnen 9 ein Lichtwellenteiler 12 in Form einer dünnwandigen Folie angeordnet ist. Die Folie 12 ist biegeelastisch und in die Führungsbahnen 9 einschweißbar. Die Folie 12 ist mit einer optischen Struktur 14 versehen bzw. ausgerüstet, wie dies noch nachfolgend näher erläutert ist. Die optische Struktur 14 kann als sogenannte Fresnel-Linsen-Struktur ausgestaltet sein, so dass durch den Lichtteiler 12 die Beleuchtungsausdehnung 11 in eine nachfolgende Beleuchtungsausdehnung 13 überführt ist. Die Beleuchtungsausdehnung 13 erstreckt sich demnach in dem Bereich, den die Lichtwellen nach deren Durchdringung des Lichtteilers 12 aufweisen. Oftmals ist es wünschenswert, dass der Boden 3 geringer ausgeleuchtet ist als die Wände 4, da an diesen Regale mit Waren verlaufen, die optisch ansprechend präsentiert werden sollen.

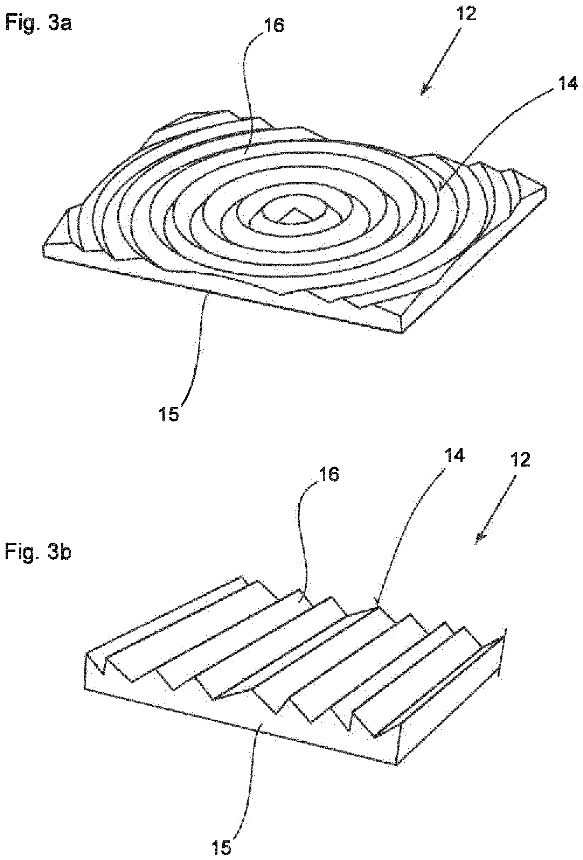

Den Figuren 3a und 3b ist der konstruktive Aufbau der Folie 12 zu entnehmen. Auf eine als Trägerschicht anzusehenden und aus einem Kunststoff hergestellte erste Schicht 15 ist eine zweite Schicht 16 in Form eines flüssigen Polymers aufgetragen, die nachfolgend mittels einer nicht dargestellten Walze in eine bestimmte Struktur überführt ist. Sobald die Walze durch Druck die Polymerschicht 16 in eine vorgegebene optische Struktur 14 geformt hat, wird ein UV-Licht zum Aushärten der Polymerschicht 16 verwendet. Die ausgehärtete Polymerschicht 16 weist eine Linsenoptik auf, durch die die Folie 12 durchlaufenden Lichtwellen von der Beleuchtungsausdehnung 11 in die Beleuchtungsausdehnung 13 überführt sind. Folglich können beliebige Lichtbrechungen und Lichtleitungen durch die optische Struktur 14 der Folie 12 erreicht sein.

Gemäß Figur 2 kann die Folie 12 aufgrund ihrer biegeelastischen Eigenschaften auf eine Rolle 17 zu Transport- und Lagerzwecken aufgewickelt sein. Sobald die Leiste 5 an der Decke 2 befestigt ist, wird die Folie 12 in die beiden parallel zueinander verlaufenden Führungsbahnen 9 eingeschoben. Die Folie 12 erstreckt sich anschließend über die gesamte Länge der Leiste 5, so dass eine vollständig geschlossene Leiste 5 geschaffen ist. Durch die von den LEDs abgestrahlte Wärme dehnt sich die Folie 12 zwar geringfügig aus, jedoch kann diese räumliche Ausdehnung der Folie 12 an den beiden Stirnseiten der Leiste 5 aufgenommen werden, da in den Abschlüssen der Leiste 5 ein Deckel oder eine Blende eingesetzt ist, in die die Folie 5 nach ihrer Wärmeausdehnung eintauchen kann.

Die Wandstärke der Folie 12, und zwar der beiden Schichten 15 und 16 zusammen, beträgt im Ausführungsbeispiel der Figuren 1 bis 3b 0,5 mm. Die Folie 12 soll auf die Rolle 17 aufwickelbar sein und eine entsprechende optische Struktur 14 aufweisen, so dass sowohl eine Biegeelastizität als auch eine gewisse Wandstärke für die Eigenstabilität vorhanden sein soll. Demnach beträgt die Wandstärke der Folie mindestens 0,3 und maximal 0,7 mm. Sollte die Wandstärke der Folie 12 größer als 0,7 mm sein, geht die Biegeelastizität der Folie 12 verloren; und wenn die Wandstärke der Folie 12 niedriger als 0,3 mm ist, dann verliert die Folie 12 ihre Formstabilität bzw. Festigkeit.

Die druckförmige optische Struktur 14 der Folie 12 gemäß Figur 3b verläuft senkrecht zu der Leiste 5. Es versteht sich, dass die abgebildete optische Struktur 14 lediglich beispielhaft ist und jede beliebige Kontur, vorzugsweise in einer linearen oder polygonalen Form.

## Patentansprüche

1. Beleuchtungsvorrichtung (1), bestehend aus:
- einer als U-Profil ausgestalteten Leiste (5), in deren beiden parallel verlaufenden Schenkeln (6, 7) jeweils mindestens eine Führungsbahn (9) eingearbeitet ist,
- einer Vielzahl von an der Leiste (5) befestigten LEDs (Light Emitting Diodes) (10), durch die Lichtwellen in einer Beleuchtungsausdehnung (11) ausgestrahlt sind, und
- mindestens einem in zwei parallel zueinander verlaufenden Führungsbahnen (9) einschiebbare Lichtwellenteiler (12), der als dünnwandige und biegeelastische Folie ausgestaltet ist,
- mindestens einer auf oder in der Folie (12) vorgesehenen optischen Struktur (14), die in der Beleuchtungsausdehnung (11) der LEDs (10) angeordnet ist,
- wobei die Folie (12) im montierten Zustand durchgehend über die gesamte Länge der Leiste (5) verläuft,
**dadurch gekennzeichnet,**
**dass** die Folie (12) aus mindestens zwei Schichten (15, 16) besteht, die in der jeweiligen Trennebene fest miteinander verbunden sind, dass die optische Struktur (14) in einer der Schichten (15, 16) der Folie (12) oder in der Trennebene zwischen zwei benachbarten Schichten (15, 16) der Folie (12) angeordnet ist und dass die optische Struktur (14) als Fresnel-Linsen-Struktur mit einer linearen oder polygonalen optischen Struktur ausgestaltet ist.

2. Beleuchtungsvorrichtung nach Anspruch 1,
**dadurch gekennzeichnet,**
**dass** die Folie (12) als Endlosband ausgestaltet ist und dass die Folie (12) auf eine Rolle (17) zu Montage-, Transport- und Lagerzwecken aufwickelbar ist.

3. Beleuchtungsvorrichtung nach Anspruch 2,
**dadurch gekennzeichnet,**
**dass** die Folie (12) während des Einschiebvorganges in die Führungsbahnen (9) der Leiste (5) von der Rolle (17) abwickelbar ist.

4. Beleuchtungsvorrichtung nach einem der vorgenannten Ansprüche,
**dadurch gekennzeichnet,**
**dass** die Folie (11) eine Wandstärke von 0,3 bis 0,7 mm, vorzugsweise 0,5 mm, aufweist.

## Claims

1. An illumination device (1) comprising:
- a strip (5) configured as a U-profile in which at least one guide path (9) is worked into both the legs (6, 7) which run parallel to one another
- a large number of LEDs (light-emitting diodes) (10) attached to the strip (5), by means of which the light waves are emitted in a lighting spread (11), and
- at least one light wave divider (12) configured as a thin-walled foil with bending flexibility that can be inserted into two guide paths (9) running parallel to one another,
- at least one optical structure (14) provided on or in the foil (12) arranged in the lighting spread (11) of the LEDs (10),
- in which the foil (12) runs continuously along the entire length of the strip (5) when installed.
**characterised in that**,
the foil (12) consists of at least two layers (15, 16) which are connected to one another in the particular parting plane, that the optical structure (14) is arranged in one of the layers (15, 16) of the foil (12) or in the parting plane between two adjacent layers (15, 16) of the foil (12), and that the optical structure (14) is configured as a Fresnel lens structure equipped with a linear or polygonal optical structure.

2. The illumination device in accordance with Claim 1,
**characterised in that**,
the foil (12) is configured as an endless strip and that the foil (12) can be wound on a roll (17) for installation, transport and storage purposes.

3. The illumination device in accordance with Claim 2,
**characterised in that**,
the foil (12) can be unwound from the roll (17) during the process of pushing it into the guide paths (9) of the strip (5).

4. The illumination device in accordance with one of the aforementioned claims,
**characterised in that**,
The foil (11) has a wall thickness of 0.3 to 0.7 mm, preferably 0.5 mm.

## Revendications

1. Dispositif d'éclairage (1) comprenant :
- une réglette (5) conçue en forme de U dont les deux bras parallèles (6, 7) comportent au moins une piste de guidage (9),
- plusieurs DEL (light emitting diodes) (10) fixées sur la réglette (5) qui assurent l'émission d'ondes lumineuses le long d'une voie d'éclairage (11),
- au moins un diviseur d'ondes lumineuses (12) se laissant glisser dans deux pistes de guidage parallèles (9) et réalisé en tant que feuille flexible à paroi mince, et
- au moins une structure optique (14) prévue sur ou dans la feuille (12) et disposée dans la voie d'éclairage (11) des DEL (10),
- où, une fois montée, la feuille (12) s'étend sans interruption sur toute la longueur de la réglette (5),
**caractérisé en ce que**
la feuille (12) consiste en au moins deux couches (15, 16) fixées ensemble dans le plan de séparation respectif, que la structure optique (14) est disposée dans une des couches (15, 16) de la feuille (12) ou dans le plan de séparation entre deux couches voisines (15, 16) de la feuille (12) et que la structure optique (14) est réalisée en lentille de Fresnel avec une structure optique linéaire ou polygonale.

2. Dispositif d'éclairage d'après la revendication 1,
**caractérisé en ce que**
la feuille (12) est conçue sous la forme d'une bande sans fin et que la feuille (12) se laisse enrouler sur un rouleau (17) en vue du montage, du transport et du stockage.

3. Dispositif d'éclairage d'après la revendication 2,
**caractérisé en ce que**
la durant l'insertion dans les pistes de guidage parallèles (9) de la réglette (5), la feuille (12) se laisse dérouler du rouleau (17).

4. Dispositif d'éclairage d'après une des revendications précédentes,
**caractérisé en ce que**
l'épaisseur de la paroi de la feuille est d'entre 0,3 et 0,7 mm, de préférence 0,5 mm.
